# NEUE EUROPÄISCHE PATENTSCHRIFT

(11) **EP 1 226 308 B2**
(45) Veröffentlichungstag und Bekanntmachung des Hinweises auf die Entscheidung über den Einspruch: **14.11.2012**
(45) Hinweis auf die Patenterteilung: 21.06.2006
(21) Anmeldenummer: 00960544.5
(22) Anmeldetag: 29.08.2000
(51) Int. Cl.: D21H 21/48, B41M 3/14, B41M 5/28, B41M 5/40, B42D 15/00

(54) **SICHERHEITSELEMENT UND WERTGEGENSTAND**
SAFETY ELEMENT AND A VALUABLE OBJECT
ELEMENT DE SECURITE ET OBJET DE VALEUR

(30) Priorität: 31.08.1999 DE 19941295
(43) Veröffentlichungstag der Anmeldung: 31.07.2002
(73) Patentinhaber: Giesecke & Devrient GmbH, 81677 München (DE)
(72) Erfinder: SCHMITZ, Christian, 83727 Schliersee-Neuhaus (DE)
(74) Vertreter: Klunker . Schmitt-Nilson . Hirsch
(86) Internationale Anmeldenummer: PCT/EP2000/008415
(87) Internationale Veröffentlichungsnummer: WO 2001/016426

(56) Entgegenhaltungen:
- EP-A- 0 526 019
- EP-A- 0 608 078
- EP-A1- 0 522 217
- EP-A1- 0 787 656
- WO-A-00/54985
- WO-A1-98/35096
- AU-A1- 73 762
- CA-A1- 2 032 587
- DE-A- 2 212 350
- DE-A- 2 909 731
- FR-A1- 2 038 104
- GB-A1- 2 201 376

## Beschreibung

Die Erfindung betrifft einen Wertgegenstand mit einem Sicherheitselement, wobei das Sicherheitselement eine thermochrome Schicht aufweist.

Es ist bereits seit langem bekannt, thermochrome Materialien zur Absicherung von Wertdokumenten zu verwenden. So beschreibt beispielsweise die DT 22 12 350 einen Sicherheitsfaden aus transparentem Kunststoff, der Hohlräume aufweist. In diesen Hohlräumen befindet sich ein flüssigkristallines Material, das bei Erhöhung oder Erniedrigung der Temperatur einen reversiblen Farbumschlag zeigt.

Aus der EP 0 608 078 B1 ist ebenfalls ein Sicherheitsfaden mit thermochromen Eigenschaften bekannt. In diesem Fall wird ein Kunststoffmaterial mit einem Aufdruck oder mit Zeichen versehen, die durch teilweises Demetallisieren einer Metallschicht entstanden sind. Über diesem Aufdruck bzw. diesen Negativzeichen ist ein bei Normaltemperatur farbiger thermochromer Überzug angeordnet. Bei Erwärmung wird der thermochrome Überzug farblos, so dass die darunter liegenden Zeichen erkennbar werden. Alternativ kann auch ein thermochromer Überzug verwendet werden, der bei Normaltemperatur farblos ist und bei Erwärmung farbig wird, so dass die Zeichen verschwinden. Dieser Faden wird so in das Sicherheitspapier eingebracht, dass er in bestimmten Bereichen, sogenannten "Fenstern", direkt an die Oberfläche tritt.

Derartige thermochrome Sicherheitsfäden haben jedoch den Nachteil, dass sie sehr schmal sind und der thermochrome Effekt nur in den relativ kleinen Fensterbereichen zu erkennen ist, weshalb der durch den Farbumschlag des thermochromen Materials hervorgerufene optische Effekt sehr unauffällig ist. Derartige Sicherheitselemente bieten daher keinen hohen Fälschungsschutz.

Der Erfindung liegt daher die Aufgabe zugrunde, einen Wertgegenstand mit einem Sicherheitselement zu schaffen, das einen hohen Fälschungsschutz bietet und die Nachteile des Standes der Technik vermeidet.

Diese Aufgabe wird durch die Merkmale des unabhängigen Anspruchs gelöst. Weiterbildungen sind Gegenstand der Unteransprüche.

Gemäß der Erfindung wird das die thermochrome Schicht aufweisende Sicherheitselement vollständig auf der Oberfläche des Gegenstandes angeordnet und mit einer transluzenten Effektschicht kombiniert, die bei Änderung des Betrachtungswinkels in Reflexion unterschiedliche Farbeindrücke erzeugt, wobei die thermochrome Schicht unter der transluzenten Effektschicht angeordnet ist. Da das Sicherheitselement vollständig auf der Oberfläche des Gegenstandes angeordnet ist, kann es wesentlich großflächiger ausgeführt werden, so dass der Farbumschlag des thermochromen Materials aufgrund der größeren Fläche wesentlich augenfälliger ist. Durch die Kombination mit der transluzenten Effektschicht, die weitere visuell und/oder maschinell prüfbare Eigenschaften aufweist, wird das Sicherheitselement zusätzlich fälschungssicherer gestaltet. Denn derartige Effektschichten sind entweder aufwändig in der Herstellung oder können nicht ohne weiteres im Handel bezogen werden.

Die Druckfarbe kann selbstverständlich weitere Farbpigmente enthalten. Sie wird vorzugsweise in Form eines Musters oder alphanumerischer Zeichen aufgebracht.

Die Effektschicht ist eine gerichtet reflektierende Schicht, d. h. sie erzeugt bei Änderung des Betrachtungswinkels in Reflexion unterschiedliche Farbeindrücke. Derartige optisch variable Eigenschaften zeigen beispielsweise die vorgenannten Flüssigkristallpigmente, die einem transparenten Bindemittel oder einer transparenten Kunststoffschicht beigemischt werden können. Der optisch variable Effekt lässt sich jedoch erfindungsgemäß auch mit transparenten Beugungsgitterstrukturen erzeugen. Hierbei wird eine transluzente oder transparente Schicht, vorzugsweise eine Lackschicht, mit einer Reliefstruktur in Form einer Beugungsstruktur versehen. Anschließend wird die Reliefstruktur mit einer lichtdurchlässigen dielektrischen Schicht kombiniert, um den optisch variablen Effekt der Beugungsstruktur in Reflexion beobachten zu können. Gleichzeitig kann jedoch eine unter der Beugungsstruktur angeordnete Information aufgrund der Transparenz der Schichten erkannt werden.

Die mit der Reliefstruktur in Form einer Beugungsstruktur versehene Effektschicht kann mit einer Metallschicht, vorzugsweise Aluminiumschicht, kombiniert sein. Die Metallschicht wird hierbei entweder vollflächig oder zumindest bereichsweise in Form eines Rasters ausgeführt. Zusätzlich kann die Metallschicht Aussparungen in Form von Zeichen oder Mustern aufweisen, in welchen ebenfalls eine Metallschicht in Form eines Rasters angeordnet sein kann. Diese zweite Metallschicht besteht vorzugsweise ebenfalls aus einer Aluminiumschicht. D.h., die gerichtet reflektierende Schicht kann gemäß einer besonderen Ausführungsform aus einem metallischen Raster mit vorbestimmter Rasterpunktgröße und Rasterweite bestehen, in welche Bereiche eingebracht sind, die hinsichtlich der Rasterweite und/ oder der Rasterpunktgröße variieren. Auf diese Weise können lesbare Zeichen oder Muster in der reflektierenden Schicht vorgesehen werden. Die Rasterelemente müssen allerdings nicht notwendigerweise Punkte sein. Sie können auch aus Linien oder anderen geometrischen Formen bestehen.

Gemäß einer weiteren Ausführungsform können in den Aussparungen der reflektierenden Schicht thermochrome Zeichen oder Muster angeordnet werden. Vorzugsweise ist die Umschlagstemperatur dieser thermochromen Schicht von der der ersten thermochromen Schicht verschieden.

Auch für die erfindungsgemäße thermochrome Schicht bieten sich im Rahmen der Erfindung zahlreiche Variationsmöglichkeiten. So kann die thermochrome Schicht vollflächig oder auch nur bereichsweise, vorzugsweise in Form von Zeichen oder Mustern vorgesehen sein. Eine weitere Möglichkeit besteht darin, die thermochrome Schicht mit wenigstens einer weiteren thermochromen oder visuell/erkennbaren Schicht zu kombinieren, wobei sich die beiden Schichten zu einer erkennbaren Information ergänzen.

Erfindungsgemäß ist die thermochrome Schicht unter der lichtdurchlässigen Effektschicht angeordnet. So kann unterhalb der thermochromen Schicht eine weitere Information in Form von Zeichen und/oder Mustern angeordnet sein. Diese Information wiederum kann wahlweise aufgedruckt oder mittels eines Lasers erzeugt werden. Die Information ist vorzugsweise schwarz. Andere Farbgestaltungen sind jedoch nicht ausgeschlossen. Zusätzlich kann die Information maschinell und/oder visuell prüfbare Eigenschaften, wie Lumineszenz oder Magnetismus, aufweisen.

Für die thermochrome Schicht werden bevorzugt thermochrome Stoffe verwendet, die unterhalb einer vorbestimmten Temperatur opak und oberhalb dieser Temperatur zumindest durchscheinend sind. Bei bestimmten Anwendungen kann es sinnvoll sein, thermochrome Stoffe zu verwenden, die unterhalb einer vorbestimmten Temperatur durchscheinend oder transparent und oberhalb dieser Temperatur opak sind. Die Umschlagstemperatur der thermochromen Stoffe liegt vorzugsweise oberhalb der Umgebungstemperatur, z.B. im Bereich von 25 °C bis 60 °C, vorzugsweise 30 °C bis 60 °C.

Die einzelnen Schichten des Sicherheitselements können entweder direkt auf dem Wertgegenstand erzeugt oder auf einem separaten Träger vorbereitet werden. Bei letzterer Ausführungsform kann das Sicherheitselement beispielsweise als selbsttragendes Etikett ausgebildet sein. Alternativ ist es jedoch auch möglich, ein Transfermaterial herzustellen, bei dem auf einem Trägermaterial der Schichtaufbau des späteren Sicherheitselements in Endlosform vorbereitet wird. Anschließend wird der Schichtaufbau von diesem Trägermaterial in der gewünschten Umrissform mit Hilfe eines Klebstoffs auf den Wertgegenstand übertragen. Vorzugsweise wird hierfür ein Heißschmelzkleber verwendet. Um die Umrissform des Sicherheitselements festzulegen, kann entweder nur in den zu übertragenden Bereichen eine Klebstoffschicht vorgesehen werden oder der Klebstoff, wie beispielsweise ein Heißschmelzkleber, wird nur in den zu übertragenden Bereichen aktiviert.

Bei dem Wertgegenstand, auf welchen das Sicherheitselement aufgebracht wird, kann es sich beispielsweise um ein Sicherheitspapier, ein Sicherheitsdokument, aber auch um Produktverpackungen handeln. Auch andere Wertgegenstände, die eine sicherheitstechnische Absicherung benötigen, können selbstverständlich mit dem Sicherheitselement versehen werden.

Weitere Vorteile und Ausführungsformen der Erfindung werden anhand der Figuren näher erläutert.

Es zeigen:
- Fig.1: ein erfindungsgemäßen Sicherheitsdokument mit einem Sicherheitselement,
- Fig. 2 bis 8: verschiedene Ausführungsformen des Sicherheitsdokuments im Querschnitt.

Die Erfindung wird aus Gründen der Übersichtlichkeit am Beispiel einer Banknote näher erläutert.

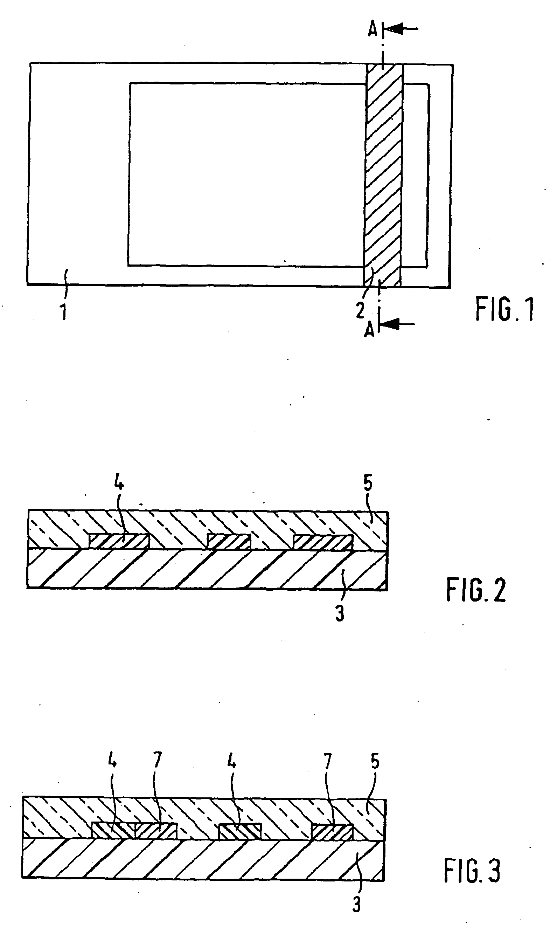

Fig.1 zeigt eine derartige Banknote 1 aus Papier oder Kunststoff, die mit einem über die gesamte Breite der Banknote verlaufenden Sicherheitselement 2 in Form eines Streifens versehen ist. Die Banknote 1 kann selbstverständlich weitere Sicherheitsmerkmale, wie Wasserzeichen, Stahltiefdruck, Sicherheitsfaden oder lumineszierende oder magnetische Aufdrucke oder Ähnliches aufweisen.

Das Sicherheitselement 2 weist eine thermochrome Schicht auf, die mit einer Effektschicht kombiniert ist, die ihrerseits visuell und/ oder maschinell prüfbare Eigenschaften besitzt. Das Sicherheitselement 2 ist vollständig auf der Oberfläche der Banknote 1 angeordnet, so dass der Farbumschlag der vorzugsweise vollflächig aufgebrachten thermochromen Schicht sehr gut erkennbar ist.

Neben der thermochromen Schicht und der Effektschicht kann das Sicherheitselement 2 auch weitere Schichten aufweisen, die allein oder in Kombination mit anderen Schichten des Sicherheitselements weitere auffällige optische Effekte erzeugen. Einige bevorzugte Ausführungsformen werden anhand der Fig. 2 bis 10 näher erläutert, welche die Banknote 1 im Querschnitt entlang der strichpunktierten Linie A - A zeigen, um den Schichtaufbau des Sicherheitselements 2 zu verdeutlichen.

Gemäß Fig. 2 wird das Papier- oder Kunststoffsubstrat 3 der Banknote 1, das eine weiße oder helle Eigenfarbe aufweist, mit einem thermochromen Aufdruck 4 in Form von Zeichen oder Mustern versehen. Über der thermochromen Schicht 4 ist eine gerichtet reflektierende transluzente Schicht 5 angeordnet, die bei Änderung des Betrachtungswinkels in Reflexion unterschiedliche Farbeindrücke erzeugt. Dieser Effekt wird als "optisch variabler" Effekt bezeichnet. Bei der Schicht 5 kann es sich beispielsweise um eine Druckfarbe handeln, die aus einem transparenten Bindemittel besteht, in das Flüssigkristallpigmente eingemischt sind.

Da diese Pigmente lichtdurchlässig sind und keine oder nur eine geringe eigene Körperfarbe aufweisen, wird der visuell erkennbare optische Eindruck dieser Pigmente sehr stark vom Untergrund geprägt. Auf einem diffus reflektierenden weißen oder hellen Untergrund treten die Pigmente kaum in Erscheinung, da das diffus reflektierte Streulicht den auf Interferenzeffekten beruhenden optisch variablen Effekt überlagert. Auf einem dunklen Untergrund dagegen kommt das Farbspiel dieser Pigmente besonders gut zu Geltung, da dieser die transmittierte Strahlung absorbiert.

Aus diesem Grund wird für die Schicht 4 vorzugsweise ein thermochromes Material verwendet, das bei normaler Umgebungstemperatur opak ist und eine dunkle, vorzugsweise schwarze Eigenfarbe aufweist. In diesem Fall tritt der durch die Effektschicht 5 erzeugte optisch variable Effekt im Bereich der thermochromen Schicht 4 besonders hervor, so dass die durch die thermochrome Schicht 4 dargestellten Zeichen sichtbar werden. Oberhalb der Umschlagstemperatur der thermochromen Schicht 4 wird diese vorzugsweise farblos oder schlägt in eine andere wesentlich hellere Farbe um, so dass die Zeichen nicht länger erkennbar sind.

Der umgekehrte Effekt tritt ein, wenn ein thermochromes Material verwendet wird, das bei normaler Umgebungstemperatur hell oder transparent ist und erst oberhalb einer bestimmten Aktivierungstemperatur opak, vorzugsweise schwarz.

In Fig. 3 ist das Substrat 3 mit einem thermochromen Aufdruck 4 sowie einem weiteren Aufdruck 7 versehen. Darüber ist, analog zu Fig. 2, eine optisch variable, lichtdurchlässige Schicht 5 angeordnet. Aufdruck 4 und Aufdruck 7 ergänzen sich zu einer Gesamtinformation, die aus einem Text, Bild, Muster oder dergleichen bestehen kann. Der Aufdruck 7 weist keine thermochromen Eigenschaften auf, kann aber den gleichen visuellen Farbeindruck zeigen wie die thermochrome Schicht 4.

Für den Aufdruck 4 wird vorzugsweise ein thermochromes Material verwendet, das bei normaler Umgebungstemperatur opak ist und eine dunkle Eigenfarbe aufweist. Der Aufdruck 7 wird ebenfalls dunkel gewählt, so dass die optisch variable Schicht 5 lediglich im Bereich der Aufdrucke 4, 7 deutlich wahrzunehmen und damit die durch die Aufdrucke 4, 7 dargestellte Information erkennbar ist. Erwärmt man das Sicherheitselement auf eine Temperatur oberhalb der Umschlagstemperatur des thermochromen Materials, so verschwindet der durch den Aufdruck 4 dargestellte Informationsanteil, da die thermochrome Schicht 4 farblos wird oder in eine andere wesentlich hellere Farbe umschlägt.

Der umgekehrte Fall tritt auch hier wieder ein, wenn ein thermochromes Material verwendet wird, das bei Raumtemperatur farblos ist oder eine helle Körperfarbe aufweist und erst oberhalb der Umschlagstemperatur opak bzw. dunkel wird.

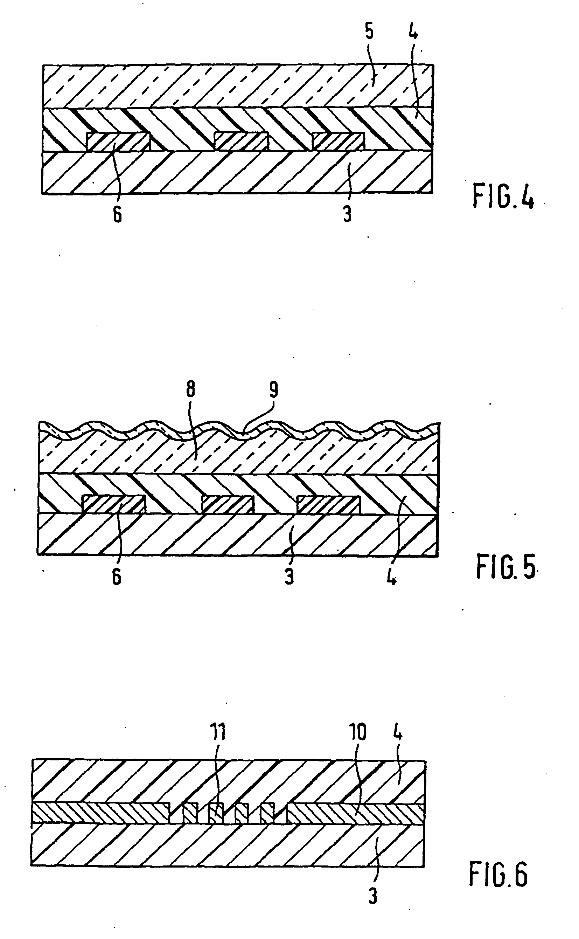

Fig. 4 zeigt einen Schichtaufbau, bei dem das Substrat 3 in einem ersten Schritt mit einem dunklen, vorzugsweise schwarzen Aufdruck 6 versehen wird. Über diesem Aufdruck 6 wird eine vollflächige Schicht 4 aus thermochromem Material, gefolgt von einer optisch variablen transluzenten Schicht 5, aufgebracht. Wird für die thermochrome Schicht 4 wiederum ein Material verwendet, das bei Umgebungstemperatur dunkel und opak ist, so erscheint die optisch variable Schicht 5 als brillante Schicht mit einem Farbwechselspiel. Oberhalb der Umschlagtemperatur des thermochromen Materials wird die Schicht 4 transparent und die optisch variable Schicht 5 kann nur noch im Bereich der darunter liegenden Kennzeichnung 6 gut erkannt werden. Auf diese Weise ist es möglich, Informationen zu erzeugen, die lediglich oberhalb der Umschlagstemperatur des thermochromen Materials sichtbar sind.

Der umgekehrte Effekt tritt selbstverständlich auch hier ein, wenn ein thermochromes Material verwendet wird, das erst oberhalb der Umschlagstemperatur opak wird. In diesem Fall ist bei Umgebungstemperatur lediglich die Kennzeichnung 6 als optisch variable Information erkennbar. Oberhalb der Aktivierungstemperatur des thermochromen Materials verschwindet diese Kennzeichnung, da die thermochrome Schicht opak wird und damit die gesamte Schicht 5 als optisch variable Schicht erkannt wird.

Bei der in Fig. 5 dargestellten Ausführungsform ist die in Fig. 4 mit 5 bezeichnete Effektschicht durch eine Kombination der Schichten 8 und 9 ersetzt. Bei der Schicht 8 handelt es sich um eine transparente Lack- oder Kunststoffschicht, in deren Oberfläche eine Reliefstruktur in Form von Beugungsstrukturen eingeprägt ist. Diese Reliefstruktur ist mit einer dünnen, dielektrischen, ebenfalls transparenten Reflexionsschicht 9 kombiniert, deren Brechungsindex derart auf den Brechungsindex der Schicht 8 abgestimmt ist, dass einerseits die Beugungsstruktur in Reflexion betrachtet werden kann und gleichzeitig eine Transparenz der Beugungsstrukturen gewährleistet ist. Analog zu den in Zusammenhang mit Fig. 2 bereits erläuterten Flüssigkristallpigmenten ist die Beugungsstruktur aufgrund ihrer Transparenz auf hellem Untergrund nicht oder nur schwach zu erkennen, während sie vor einem dunklen Untergrund deutlich sichtbar ist. Bei der in Fig. 5 gezeigten Ausführungsform treten daher die gleichen optischen Effekte auf, wie sie bereits im Zusammenhang mit Fig. 4 erläutert wurden.

Im Übrigen kann auch in den anhand von Fig. 2 und 3 beschriebenen Ausführungsformen die Schicht 5 durch eine Kombination aus Prägeschicht 8 und dielektrischer Reflexionsschicht 9 ersetzt werden.

Fig. 6 zeigt eine nicht-erfindungsgemäße Ausführungsform des Wertdokuments. Hier ist das Substrat 3 mit einer Metallschicht oder metallisch glänzenden Schicht 10 versehen, die zumindest in bestimmten Bereichen in Form eines Rasters 11 ausgeführt ist. Die gerasterten Bereiche 11 können dabei die Form von Zeichen, Mustern, Bildern oder dergleichen aufweisen. Über der Schicht 10 ist vollflächig eine thermochrome Schicht 4 angeordnet.

Je nach verwendetem thermochromen Material ist die Schicht 10 bei Raumtemperatur oder oberhalb der Umschlagstemperatur der thermochromen Schicht 4 sichtbar.

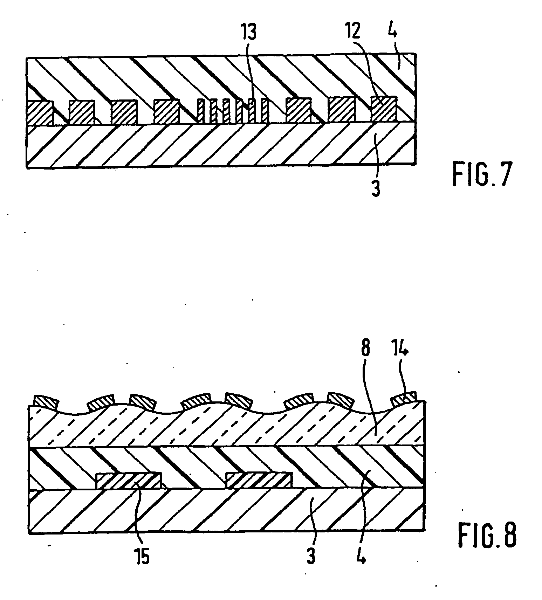

Fig. 7 zeigt eine ähnliche nicht-erfindungsgemäße Ausführungsform. In diesem Fall ist die Metallschicht bzw. metallisch glänzende Schicht im gesamten Bereich als Raster ausgeführt. Sie besteht dabei aus einem Hintergrundraster 12 mit einer bestimmten Rasterpunktgröße bzw. Rasterweite und wenigstens einem Teilbereich 13, in dem das Raster eine geringere Rasterweite sowie eine geringere Rasterpunktgröße aufweist. Mit Hilfe dieser Rastervariation können visuell lesbare Informationen dargestellt werden, die je nach verwendetem thermochromen Material 4 bei bestimmten Temperaturen sichtbar sind.

Die in den Fig. 6 und 7 gezeigten gerasterten Schichten 10,11,12,13 können erfindungsgemäß zusätzlich mit einer Prägeschicht kombiniert werden. Eine derartige Ausführungsform zeigt Fig. 8. In diesem Fall bildet die gleichmäßig gerasterte Metallschicht 14 die Reflexionsschicht für eine darunter liegende Beugungsstruktur, die in eine transparente Lackschicht 8 eingeprägt ist. Durch die Lücken in der gerasterten Schicht 14 kann eine darunter liegende Information erkannt werden. Unter der Prägeschicht 8 ist vollflächig eine thermochrome Schicht 4 sowie ein Aufdruck 15 angeordnet, wobei der Aufdruck 15 direkt an das Substrat 3 angrenzt. Wird eine bei Raumtemperatur opake thermochrome Schicht 4 verwendet, so ist unter normalen Bedingungen die Beugungsstruktur in Reflexion erkennbar. Gleichzeitig ist aufgrund der lichtdurchlässigen und damit transluzenten Beugungsstruktur der Farbeindruck der thermochromen Schicht 4 wahrnehmbar. Wird das Sicherheitselement auf eine Temperatur oberhalb der Umschlagtemperatur der thermochromen Schicht 4 erwärmt, so wird diese ebenfalls lichtdurchlässig und die Information 15 kann durch die gerasterte Schicht 14 hindurch erkannt und gelesen werden.

Wird ein bei Raumtemperatur durchscheinendes thermochromes Material 4 verwendet, so tritt der umgekehrte Effekt ein und die Information 15 wird oberhalb der Umschlagtemperatur der thermochromen Schicht 4 unsichtbar.

Die Rasterpunktgrößen bzw. Rasterpunktdichten können in den gezeigten Beispielen entsprechend den jeweiligen Anforderungen gewählt werden. Als Rasterelemente müssen nicht notwendigerweise Punkte verwendet werden. Andere geometrische Formen, wie Linien, Quadrate, Dreiecke oder dergleichen, sind ebenfalls denkbar.

Die in den jeweiligen Beispielen erwähnten Beugungsstrukturen können Hologramme oder beliebige Gitterstrukturen, wie Pixelgrame, Kinegrame® oder dergleichen darstellen.

Ebenso ist es möglich, dass die thermochrome Schicht 4 und/oder wenigstens eine der gezeigten Farbschichten 6, 7, 15, 18, 19 weitere visuell und/oder maschinell prüfbare Eigenschaften, wie elektrische Leitfähigkeit, Magnetismus, Lumineszenz oder ähnliches aufweisen. Um dem jeweiligen Aufdruck elektrisch leitfähige Eigenschaften zu verleihen, genügt es beispielsweise, den verwendeten Druckfarben eine ausreichende Menge an Rußpigmenten zuzusetzen. Da in vielen Beispielen die nichtthermochromen Aufdrucke ebenfalls eine dunkle, vorzugsweise schwarze Eigenfarbe aufweisen sollen, können sie auf sehr einfache Weise mit magnetischen Eigenschaften ausgestattet werden, indem statt Farbpigmenten dunkle magnetische Pigmente verwendet werden.

Die thermochrome Schicht kann auch mehrere thermochrome Materialien mit unterschiedlichen Umschlagstemperaturen aufweisen. Ebenso ist es möglich, die thermochrome Schicht aus mehreren Farbschichten zusammenzusetzen, die jeweils unterschiedliche thermochrome Materialien mit unterschiedlichen Umschlagstemperaturen enthalten.

Da es in einigen Fällen Schwierigkeiten bereiten kann, den Wertgegenstand direkt mit der jeweiligen Schichtfolge zu versehen, kann es sinnvoll sein, den Schichtaufbau des Sicherheitselements zumindest teilweise auf einem Transfermaterial vorzubereiten. Insbesondere bei der Verwendung von Beugungsstrukturen, die mit einer Reflexionsschicht kombiniert sind, bietet sich diese Vorgehensweise an, da die Reflexionsschicht in aller Regel im Vakuum aufgedampft wird und auch die Erzeugung von metallischen Rasterstrukturen besondere Herstellungsschritte, wie Ätzen oder Waschen, verlangt, je nachdem welches konkrete Demetallisierungsverfahren angewendet wird. Es ist daher sinnvoll, zumindest die Beugungsstrukturen und die zugehörige Reflexionsschicht als Heißprägefolie auszubilden und diese anschließend mit den übrigen Schichten des Sicherheitselements auf dem Wertgegenstand registerhaltig zu kombinieren.

Sofern die gesamte Schichtfolge des Sicherheitselements auf einem Transfermaterial vorbereitet wird, ist darauf zu achten, dass der in den jeweiligen Figuren gezeigte Schichtaufbau in der umgekehrten Reihenfolge auf dem Trägerband des Transfermaterials vorbereitet werden muss. Der Schichtaufbau des Sicherheitselements kann dabei in Endlosform auf dem Trägerband vorbereitet werden oder aber auch bereits in der endgültigen als Sicherheitselement verwendeten Umrissform. Der Übertrag des Sicherheitselements auf einen zu sichernden Wertgegenstand erfolgt dabei mit Hilfe einer Klebstoffschicht, die entweder auf den Wertgegenstand oder aber auf die oberste Schicht des Transfermaterials aufgebracht wird. Nach dem Übertrag wird das Trägerband des Transfermaterials abgezogen und lediglich der gezeigte Schichtaufbau des Sicherheitselements verbleibt auf dem zu sichernden Wertgegenstand.

## Patentansprüche

1. Wertgegenstand mit einem Sicherheitselement, wobei das Sicherheitselement eine thermochrome Schicht aufweist, welche mit einer transluzenten Effektschicht kombiniert ist, wobei die thermochrome Schicht unter der Effektschicht angeordnet ist, **dadurch gekennzeichnet, dass** das Sicherheitselement vollständig auf der Oberfläche des Wertgegenstandes angeordnet ist, und dass die transluzente Schicht bei Änderung des Betrachtungswinkels in Reflexion unterschiedliche Farbeindrücke erzeugt, indem sie Flüssigkristallpigmente enthält oder eine Reliefstruktur in Form einer Beugungsstruktur aufweist, die mit einer lichtdurchlässigen dielektrischen Schicht oder mit einer Metallschicht, die zumindest bereichsweise in Form eines Rasters vorliegt, kombiniert ist.

2. Wertgegenstand nach Anspruch 1, **dadurch gekennzeichnet, dass** das Raster in Form eines Punkt- oder Linienrasters vorliegt.

3. Wertgegenstand nach wenigstens einem der Ansprüche 1 oder 2, **dadurch gekennzeichnet, dass** die thermochrome Schicht vollflächig ist.

4. Wertgegenstand nach wenigstens einem der Ansprüche 1 oder 2, **dadurch gekennzeichnet, dass** die thermochrome Schicht nur bereichsweise vorgesehen ist.

5. Wertgegenstand nach Anspruch 4, **dadurch gekennzeichnet, dass** die thermochrome Schicht in Form von Zeichen und/ oder Mustern vorgesehen ist.

6. Wertgegenstand nach Anspruch 4, **dadurch gekennzeichnet, dass** die thermochrome Schicht mit wenigstens einer weiteren thermochromen oder visuell erkennbaren Schicht kombiniert ist, wobei sich die Schichten zu einer erkennbaren Information ergänzen.

7. Wertgegenstand nach einem der Ansprüche 1 bis 6, **dadurch gekennzeichnet, dass** unter der thermochromen Schicht eine Information in Form von Zeichen und/ oder Mustern angeordnet ist.

8. Wertgegenstand nach Anspruch 7, **dadurch gekennzeichnet, dass** die Information gedruckt oder mittels eines Lasers erzeugt ist.

9. Wertgegenstand nach Anspruch 7 oder 8, **dadurch gekennzeichnet, dass** die Information maschinell und/oder visuell prüfbare Eigenschaften aufweist.

10. Wertgegenstand nach Anspruch 9, **dadurch gekennzeichnet, dass** die Information lumineszierende oder magnetische Eigenschaften aufweist.

11. Wertgegenstand nach wenigstens einem der Ansprüche 7 bis 10, **dadurch gekennzeichnet, dass** die Information schwarz ist.

12. Wertgegenstand nach wenigstens einem der Ansprüche 1 bis 11, **dadurch gekennzeichnet, dass** die thermochrome Schicht unterhalb einer vorbestimmten Temperatur opak und oberhalb dieser Temperatur zumindest transluzent ist.

13. Wertgegenstand nach wenigstens einem der Ansprüche 1 bis 12, **dadurch gekennzeichnet, dass** die thermochrome Schicht unterhalb einer vorbestimmten Temperatur transluzent oder transparent und oberhalb dieser Temperatur opak ist.

14. Wertgegenstand nach wenigstens einem der Ansprüche 1 bis 13, **dadurch gekennzeichnet, dass** das Sicherheitselement ein Etikett ist.

15. Wertgegenstand nach wenigstens einem der Ansprüche 1 bis 14, **dadurch gekennzeichnet, dass** der Wertgegenstand ein Sicherheitspapier, ein Sicherheitsdokument oder eine Produktverpackung ist.

## Claims

1. An object of value having a security element, the security element having a thermochromic layer which is combined with a translucent effect layer, the thermochromic layer being disposed under the effect layer, **characterized in that** the security element is disposed completely on the surface of the object of value, and the translucent layer produces different color effects in reflected light upon a change of viewing angle since it contains liquid crystal pigments or has a relief structure in the form of a diffraction structure which is combined with a transparent dielectric layer or with a metal layer which is present at least in certain areas in the form of a screen.

2. The object of value according to claim 1, **characterized in that** the screen is present in the form of a dot or line screen.

3. The object of value according to at least one of claims 1 and 2, **characterized in that** the thermochromic layer is all over.

4. The object of value according to at least one of claims 1 and 2, **characterized in that** the thermochromic layer is provided only in certain areas.

5. The object of value according to claim 4, **characterized in that** the thermochromic layer is provided in the form of characters and/or patterns.

6. The object of value according to claim 4, **characterized in that** the thermochromic layer is combined with at least one further thermochromic or visually recognizable layer, the layers supplementing each other to form recognizable information.

7. The object of value according to any of claims 1 to 6, **characterized in that** information in the form of characters and/or patterns is disposed under the thermochromic layer.

8. The object of value according to claim 7, **characterized in that** the information is printed or produced by means of a laser.

9. The object of value according to claim 7 or 8, **characterized in that** the information has visually and/or machine testable properties.

10. The object of value according to claim 9, **characterized in that** the information has luminescent or magnetic properties.

11. The object of value according to at least one of claims 7 to 10, **characterized in that** the information is black.

12. The object of value according to at least one of claims 1 to 11, **characterized in that** the thermochromic layer is opaque below a predetermined temperature and at least translucent above said temperature.

13. The object of value according to at least one of claims 1 to 12, **characterized in that** the thermochromic layer is translucent or transparent below a predetermined temperature and opaque above said temperature.

14. The object of value according to at least one of claims 1 to 13, **characterized in that** the security element is a label.

15. The object of value according to at least one of claims 1 to 14, **characterized in that** the object of value is a security paper, security document or product package.

## Revendications

1. Objet de valeur comportant un élément de sécurité, dans lequel l'élément de sécurité comporte une couche thermochrome, qui est combinée avec une couche à effet translucide, la couche thermochrome étant disposée sous la couche à effet translucide, **caractérisé en ce que** l'élément de sécurité est disposé complètement au-dessus de la surface de l'objet de valeur et **en ce que** la couche translucide, en cas de variation de l'angle de vision crée par réflexion des impressions de couleurs différentes, du fait qu'elle contient des pigments cristallins liquides ou bien qu'elle comporte une structure en relief sous la forme d'une structure de diffraction qui est combinée avec une couche diélectrique transparente à la lumière ou bien avec une couche métallique présente au moins par zones sous la forme d'un réseau.

2. Objet de valeur selon la revendication 1, **caractérisé en ce que** le réseau apparaît sous la forme d'un réseau de points ou de lignes.

3. Objet de valeur selon au moins l'une des revendications 1 ou 2, **caractérisé en ce que** la couche thermochrome s'étend sur toute la surface.

4. Objet de valeur selon au moins l'une des revendications 1 ou 2, **caractérisé en ce que** la couche thermochrome est présente seulement par zones.

5. Objet de valeur selon la revendication 4, **caractérisé en ce que** la couche thermochrome est présente sous la forme de signes et/ou de modèles.

6. Objet de valeur selon la revendication 4, **caractérisé en ce que** la couche thermochrome est combinée avec au moins une autre couche thermochrome ou susceptible d'être reconnue visuellement, les couches se complétant pour constituer une information reconnaissable.

7. Objet de valeur selon au moins l'une des revendications 1 à 6, **caractérisé en ce que** en dessous de la couche thermochrome est disposée une information sous la forme de signes et/ou de modèles.

8. Objet de valeur selon la revendication 7, **caractérisé en ce que** l'information est créée par impression ou au moyen d'un laser.

9. Objet de valeur selon la revendication 7 ou 8, **caractérisé en ce que** l'information présente des caractéristiques contrôlables mécaniquement et/ou visuellement.

10. Objet de valeur selon la revendication 9, **caractérisé en ce que** l'information présente des propriétés de luminescence ou magnétiques.

11. Objet de valeur selon au moins l'une des revendications 7 à 10, **caractérisé en ce que** l'information est noire.

12. Objet de valeur selon au moins l'une des revendications 1 à 11, **caractérisé en ce que** la couche thermochrome est opaque en-dessous d'une température prédéterminée et est au moins translucide au-dessus de cette température.

13. Objet de valeur selon au moins l'une des revendications 1 à 12, **caractérisé en ce que** la couche thermochrome est translucide ou transparente en dessous d'une température prédéterminée et est opaque au-dessus de cette température.

14. Objet de valeur selon au moins l'une des revendications 1 à 13, **caractérisé en ce que** l'élément de sécurité est une étiquette.

15. Objet de valeur selon au moins l'une des revendications 1 à 14, **caractérisé en ce que** l'objet de valeur est un papier de sécurité, un document de sécurité ou un emballage de produit.
